# EUROPEAN PATENT SPECIFICATION

(11) **EP 0 554 934 B1**
(45) Date of publication and mention of the grant of the patent: **21.11.2001**
(21) Application number: 93200180.3
(22) Date of filing: 26.01.1993
(51) Int. Cl.: H04B 1/66, H04L 9/00

(54) **Transmission of digital wideband signals**
Übertragung von digitalen Breitbandsignalen
Transmission de signaux numerique à bande large

(30) Priority: 03.02.1992 EP 92200298
(43) Date of publication of application: 11.08.1993
(73) Proprietor: Koninklijke Philips Electronics N.V., 5621 BA Eindhoven (NL)
(72) Inventor: Dewolf, Jan, NL-5656 AA Eindhoven (NL); Lokhoff, Gerardus Cornelis Petrus, NL-5656 AA Eindhoven (NL); Hoogendoorn, Abraham, NL-5656 AA Eindhoven (NL)
(74) Representative: van der Kruk, Willem Leonardus

(56) References cited:
- EP-A- 0 141 520
- EP-A- 0 150 082
- EP-A- 0 178 608
- EP-A- 0 402 973
- EP-A- 0 457 391
- US-A- 4 603 413
- THE BELL SYSTEM TECHNICAL JOURNAL, vol. XLVI, February 1967 J.E. SAVAGE "Some Simple Self-Synchronizing Digital Data Scramblers" pages 449-487

## Description

The invention relates to transmitting, *via* a transmission or recording medium, a wide-band digital signal, for example a digital audio signal.

The invention further relates to receiving, from a transmission or recording medium, an encoded digital signal.

The invention also relates to a record carrier.

European Patent Application no. 0,402,973, *i.e.* publication (2) in the list of References at the end of the present Application discloses a transmitter in a digital transmission system that derives from a wideband digital signal having a sample frequency Fs, a second digital signal appearing on its output, which signal comprises successive frames, each frame being made up of information packets. A frame comprises a first frame portion, a second frame portion, and a third frame portion. The first frame portion contains synchronising information and system information. The second frame portion contains allocation information, and the third frame portion contains samples of and, if applicable, scale-factor information for the second digital signal. The known system is a recording and reproducing system of the DCC type, in which a digital audio signal is recorded in one or more tracks on a magnetic record carrier. Another possible field of use of the invention is digital transmission, such as digital audio broadcasting (DAB).

It is an object of the invention to propose a transmission system, which protects the information to be transmitted from being received by unauthorized persons.

To this end, the invention provides a transmitter, a receiver, a record carrier, a method of transmitting and a method of receiving as defined in the independent claims. Advantageous embodiments are defined in the dependent claims.

Since the allocation information is selectively subjected to an additional signal processing step the allocation information is changed (mutilated) in such a manner that at the receiver end the bit allocation information cannot be derived correctly from the received signals. As is described with reference to Figure 12 in document (2) the allocation information is needed to derive from the serial data stream of the second digital signal the quantized samples of the signal blocks of the different subbands. If the bit allocation information in the received signal no longer complies with the standard as described in document (2) it is, in fact, no longer possible to determine how many bits represent the samples in the corresponding signal blocks in the subbands, so that decoding of the audio information is not possible. The original signal can be reconstructed only if the receiver is capable of selectively processing the received allocation information in an inverse manner.

The invention can be used, for example, in subscriber radio, where the subscribers have to pay for the received radio programs. Another field of use is the communication between non-public institutions, for example in police radio communication, where the information to be transmitted is secret and should not be intelligible to unauthorized persons.

The signal processing step may, for example, be such that the third coding means in the transmitter are adapted to aselectively modulate (scramble) the bit allocation information in the frame, and the second decoding means in the receiver are adapted to demodulate (descramble) the modulated bit allocation information in the frame in a manner inverse to the modulation in the third coding means in the transmitter.

The third coding means in the transmitter may comprise either a non-self-synchronizing or a self-synchronizing modulator (scrambler).

Self-synchronizing modulators (scramblers) are known *per se,* for example from J.E. Savage, "Some simple self-synchronizing digital data scramblers", The Bell System Technical Jrnl., Febr. 1967, pp. 449-487. Non-self-synchronizing modulators are also known *per se* from the literature. Non-self-synchronizing modulators are preferred over self-synchronizing modulators because error propagation is not possible with the first type of modulator in contrast with the second type.

The third coding means may scramble the bit allocation information already before this information has been combined with the scale factor information and the quantized subband signals in order to obtain the second digital signal. Another possibility is that the third coding means modulates the bit allocation information as included in the second digital signal.

At the receiver end descrambling should be effected in the appropriate manner, *i.e.* inversely to the method of scrambling at the transmitter end.

It is to be noted that the use of scramblers and descramblers in accordance with the invention in Compact-Disc-like systems is described in United States Patent 4,603,413, *i.e.* document (11) in the citation index. There, modulation is effected aselectively in dependence upon the d.c. unbalance in the signal to be transmitted.

Another signal processing possibility for the allocation information at the transmitter end is to change the sequence of the allocation information in a frame. The allocation information may then, for example, be subjected to a kind of interleaving. The sequence of the allocation information may then be changed on a word basis. This is to be understood to mean that the y-bit code words, which are related to the number of bits representing the samples in corresponding signal blocks in the subbands and by means of which the allocation information is composed, are not affected themselves but that merely the word sequence is changed. If at the receiver side no allowance is made for this change of sequence an incorrect number of bits will be assigned to a sample and, as a result, the samples will be decoded incorrectly.

Therefore, at the receiver end the sequence has to be changed in a manner inverse to the change of sequence at the transmitter end in order to restore the original sequence.

Interleaving as a possibility of changing the sequence is a step which is known *per se* and, for example, in the Compact Disc Digital Audio System it is applied to the audio information to be recorded, see Philips Technical Review, Vol. 40, 1982, no. 6, pp. 162-170.

Some embodiments of the invention will now be described in more detail, by way of example, with reference to the drawings. In the drawings
Figure 1 shows the transmitter in the transmission system,
Figure 2 shows the second digital signal generated by the transmitter,
Figure 3 shows an embodiment of the receiver in accordance with the invention,
Figure 4 shows an example of the third coding means,
Figure 5 shows an example of a non-self-synchronizing modulator (scrambler), and
Figure 6a shows the original sequence of the allocation words and Figure 6b a possible sequence after a change of the original sequence.

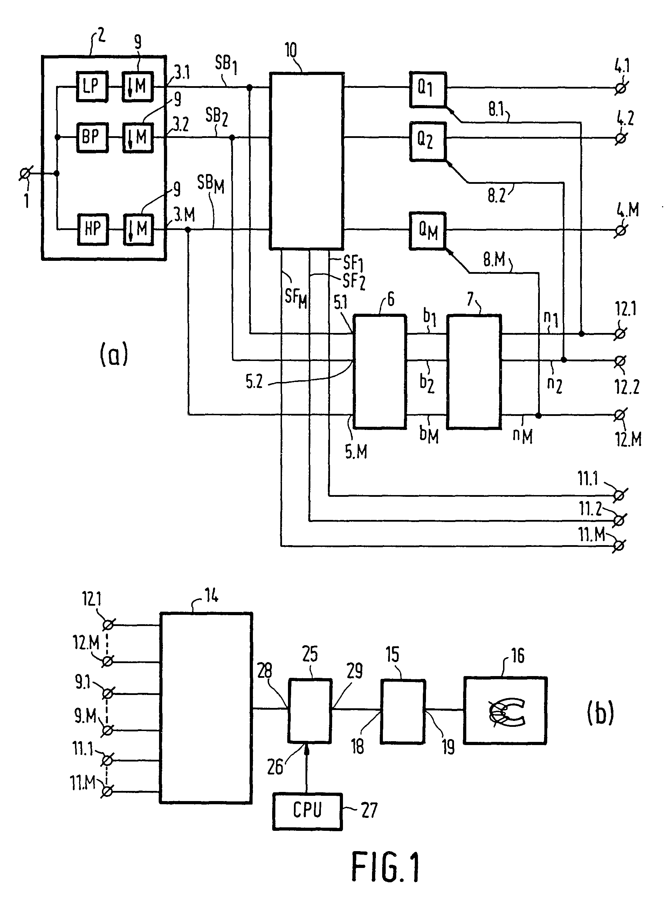

Figure 1 shows in (a) the coding means of the transmitter. A wide-band digital signal is applied to an input terminal 1. This signal may be an audio signal having a bandwidth of about 20 kHz. The audio signal may be a stereo audio signal. In that case only one of the two signal portions (the left-channel or right-channel signal portion) of the stereo audio signal will be discussed hereinafter. The other signal portion will then be subject to the same process.

For example, 16-bit samples of, for example, the left-channel signal portion of the audio signal having a 44 kHz sample frequency are applied to the input 1. The audio signal is applied to a subband coder 2 comprising analysis filter means. The subband coder 2 distributes the audio signal over M subbands by means of M filters, *i.e.* a low-pass filter LP, M-2 band-pass filters BP and a high-pass filter HP. M is, for example, 32. The sample frequency of the M subband signals is reduced in the blocks referenced 9. In such a block the sample frequency is reduced by a factor of M. The signals thus obtained are presented at the outputs 3.1, 3.2, ... 3.M. The signal in the lowest sub-band SB₁ is presented at the output 3.1. The signal in the lowest but one sub-band SB₂ is presented at the output 3.2. The signal in the highest sub-band SBₘ is presented at the output 3.M. The signals at the outputs 3.1 to 3.M take the form of successive samples expressed in 16 or more-bit numbers, for example 24-bit numbers. In the present exemplary embodiment the sub-bands SB₁ to SB_{M} are all equally wide.

However, this is not necessary. The prior-art publication (5), Krasner, for example proposes a division into a plurality of subbands whose bandwidths approximately correspond to the bandwidths of the critical bands of the human auditory system in the respective frequency areas.

The operation of the subband coder 2 will not be explained because the operation of a subband coder has already been described comprehensively. For this purpose reference is made to the prior-art documents (1), (5) and (7).

The subband signals are combined in successive signal blocks of q successive samples, *cf*. Fig. 1a, and are applied to an associated quantizer Q₁ to Q_{M}. In a quantizer Qₘ the samples are quantized to form quantized samples having a number of bits nₘ smaller than 16.

Fig. 1 shows how the left-channel subband signals in signal blocks of q successive samples are applied to an associated quantizer Qₘ. In like manner the right-channel subband signals in signal blocks of q successive samples are applied to an associated quantizer (not shown). During quantization the signal blocks (groups) of q successive samples of the subband signal portions are each time quantized to a smaller number of bits. For example, q is equal to 12. In addition, the q samples are first normalized in a signal block. This normalization is effected in a block 10 by dividing the amplitudes of the q samples by the amplitude of the sample having the largest absolute value in the signal block. The amplitude of the sample having the largest amplitude in the signal block of the subband SBₘ produces a scale factor SFₘ, see document (2). Subsequently, the amplitudes of the normalized samples, which are now situated in an amplitude range from -1 to +1, are quantized.

In the prior-art document (2) this quantization is discussed extensively, *cf.* Figs. 24, 25 and 26 and the relevant description in that document.

The quantized samples in the subbands SB₁ to SB_{M} are then presented at the respective outputs 4.1 to 4.M.

The outputs 3.1 to 3.M are further coupled to the respective inputs 5.1 to 5.M of bit-need determining means 6. The bit-need determining means 6 determines the bit need bₘ for time-equivalent q-sample signal blocks of the left-channel and right-channel subband signal portions in the subbands SB₁ to SB_{M}. The bit need bₘ is a number which is related to the number of bits with which the q samples in a q-sample signal block in a subband signal portion should be quantized.

The bit needs b₁ to b_{M} derived by the bit-need determining means 6 are applied to bit allocation means 7. The bit allocation means 7 determine the actual number of bits n₁ to n_{M} with which the q samples of the corresponding signal blocks in the subband signals SB₁ to SB_{M} are to be quantized on the basis of the bit needs b₁ to b_{M}. Control signals corresponding to the numbers n₁ to n_{M} are applied to the respective quantizers Q₁ to Q_{M} *via* the lines 8.1 to 8.M, so that the quantizers can quantize the samples with the correct number of bits.

Documents (9a) and (9b) of the citation index extensively discuss the operation of the bit-need determining means 6 and the bit allocation means 7.

The quantized samples in the signal blocks of the subband signals are subsequently applied to inputs 12.1 to 12.M of a signal combining unit 14. Likewise, the bit allocation information formed from the numbers n₁ to n_{M} is applied, if required after conversion, to the inputs 9.1 to 9.M of the combining unit 14. Document (2) indicates that the numbers in the bit allocation information which represent the number of bits by which the samples have been represented are converted to y-bit code words, where y is 4, see Fig. 9 in document (2). Similarly, the scale factor information formed from the scale factors SF₁ to SF_{M} is applied, if required after conversion, to the inputs 11.1 to 11.M of the combining unit 14.

Fig. 1b shows a second section of the transmitter, which section includes, in addition to the combining unit 14, a second encoder 15 as well as a means 16 for applying the signal presented at its input to a transmission medium. In the present case this transmission medium is a magnetic record carrier.

In addition to the samples, the bit allocation information and the scale factor information for the left-channel signal portions in the subbands, also the samples, the bit allocation information and the scale factor information for the right-channel signal portions in the subbands are applied to the combining unit 14. The unit 14 combines the signals and arranges them serially in successive frames of a second digital signal presented at its output 17.

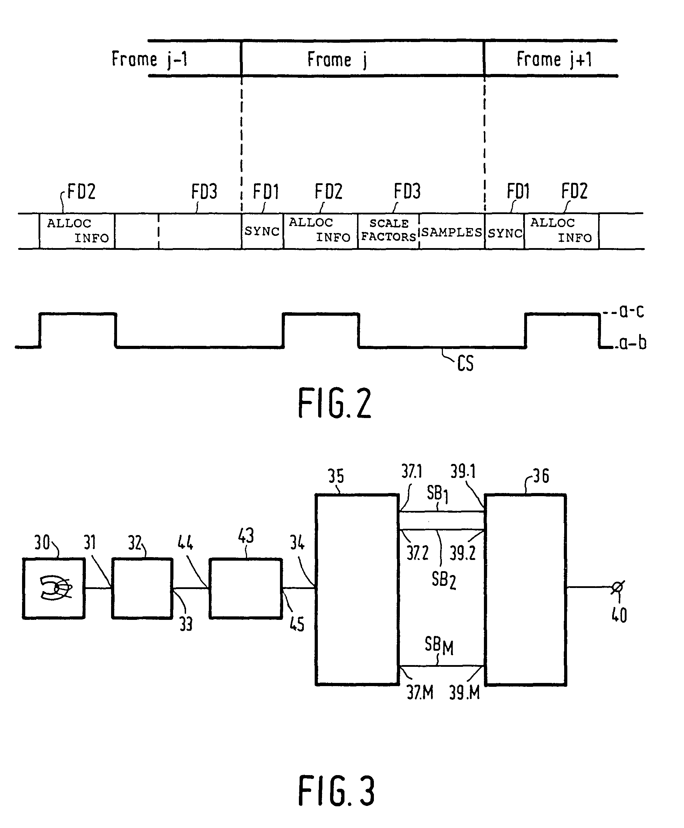

Fig. 2 shows the format of this second digital signal. This format is described extensively in document (2) of the citation index. Fig. 2 shows the second digital signal comprising the successive frames j-1,j,j+1 and shows how a frame may be formed. The frame comprises a first frame portion FD1 in which sync information may be contained, a second frame portion FD2 in which the allocation information may be contained and a third frame portion FD3. This third frame portion first contains the scale factor information and then the samples of the quantized signals in the subbands. For a further description reference is made to document (2).

The second digital signal is applied to the input 18 of the second encoder 15. In this encoder another encoding is performed on the second digital signal to enable an error correction to be applied to the received information at the receiver end. For this purpose the second digital signal is subjected to, for example, a Reed Solomon encoding and, if required, interleaving. Moreover, the signal is encoded in such a way that the information to be transmitted is suitable for transmission through the transmission medium. To this end, for example, an 8-to-10 encoding may be applied to the 8-bit words constituting the signal. Such an 8-to-10 conversion is described in, for example, the Applicant's European Patent Application 0,150,082. During this conversion the 8-bit information words are converted to 10-bit code words.

The third digital signal thus obtained is supplied to the output 19. This output 19 is coupled to an input 20 of the means 16, which takes the form of recording means 16 for recording the third digital signal on a magnetic record carrier.

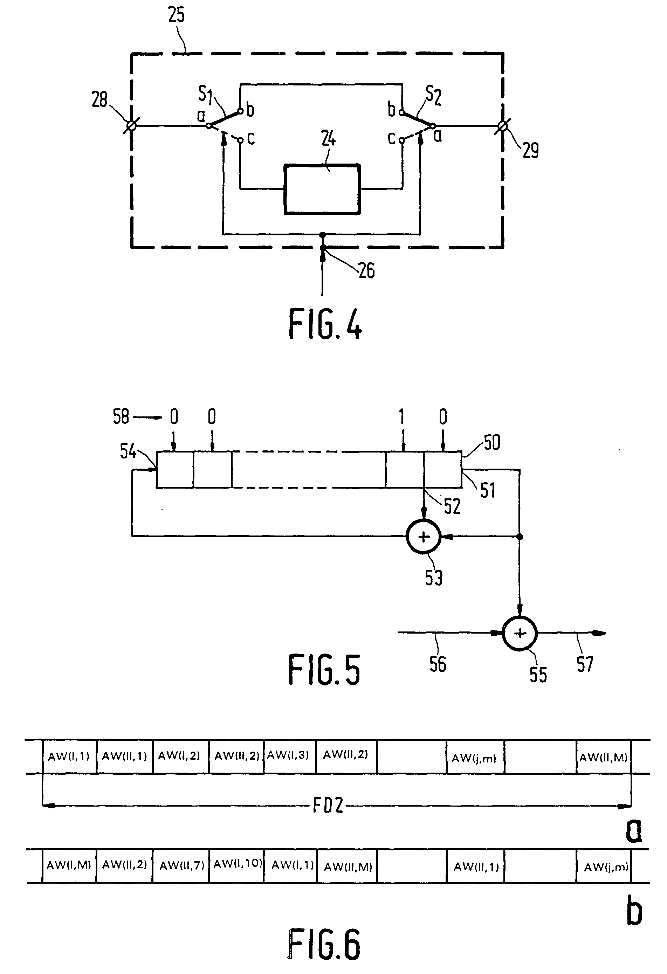

In an embodiment of the invention the transmitter comprises third coding means for aselectively modulating (scrambling) the bit allocation information in a frame. The third coding means may be provided at different locations in the transmitter. Figure 1 shows the third coding means 25 coupled between the output of the signal combining unit 14 and the input 18 of the second coding means 15. The third coding means are operative only at the instant at which the second frame portions FD2 in the frames are received. For this purpose a central processing unit CPU 27 supplies a control signal cs as shown in Fig. 2 is applied to a control signal input 26 of the third coding means 25. The coding means 25 are shown in more detail in Fig. 4. In the intervals in which the control signal cs is 'low' the switches S1 and S2 in the coding unit 25 in Fig. 4 are in position a-b. In this case the coding means form an interconnection so that the signal at the input 28 is applied directly to the output 29. In the time intervals in which the control signal cs is 'high', *i.e.* during the instants at which the second frame portions FD2 are applied to the coding means 25, the switches S1 and S2 are in position a-c. The allocation information is now applied to the modulator (scrambler) 24, in which the allocation information is modulated aselectively, after which the modulated allocation information is supplied to the output 29.

Fig. 5 shows an example of the modulator 24.

Fig. 5 gives an example of a non-self-synchronizing modulator (scrambler). The modulator comprises a shift register 50 with a length of, for example, 15 bits. The output 51 of the shift register and the output 52 of the penultimate position in the shift register are coupled to the two inputs of a modulo-2 adder 53. The output of the adder 53 is coupled to the input 54 of the shift register. The output 51 of the shift register 50 is also coupled to an input of a modulo-2 adder 55. The signal line 56 via which the allocation information is applied is coupled to the other input of the adder 55. The modulated allocation information appears on the signal line 57, which is coupled to the output of the adder 55. When the recording process is started the shift register is loaded with a starting value 58, for example all logic "zeros", except for the penultimate position which is a logic "one". When it is assumed that the value 01111001 is applied as the first data block via the line 56 during the first eight clock pulses in the system (the most significant bit first), the value 11000000 is added to the first-mentioned value in the modulo-2 adder 55, so that the result 10111001 appears on the line 57. It is to be noted that upon every clock pulse two bits of the two values are added to each other in the modulo-2 adder 55.

It is evident that apart from the present example other versions of a non-self-synchronizing modulator are possible. For example, a different starting value may be selected or outputs of other positions may be coupled to the inputs of the adder 53. Neither is it necessary to apply a modulation (scrambling) by means of a modulo-2 addition (in the adder 55). However, such a modulation has one major advantage. This is that the same circuit as shown in Figure 5 can be employed for demodulating (descrambling) the additionally modulated information during read-out. The starting value of the shift register in the demodulator at the beginning of the read-out must then be the same as the starting value of the modulator during recording. This may be achieved by also recording the starting value used during recording as information in the record carrier, so that during reading this starting value can be read and loaded into the shift register of the demodulator (descrambler). Below the additional modulation and demodulation are illustrated for an arbitrary data byte D. M is the number with which the data block D is modulated to form the data block D and is subsequently demodulated.
D = 10001101
M = 10110101 + (modulo 2)
D_{S}=00111000
M = 10110101 + (modulo 2)
   10001101
The final result after demodulation is identical to the data byte D.

Instead of non-self-synchronizing modulators/ demodulators it is possible to employ self-synchronizing modulators/demodulators. These are generally known from the literature, see the previously mentioned Bell System Technical Journal of February 1967, and therefore they are not discussed in more detail.

Fig. 3 shows diagrammatically an embodiment of the receiver in accordance with the invention. The receiver comprises means 30 for receiving the third digital signal from the transmission medium. In this case the means 30 take the form of read means for reading information from a magnetic record carrier. The read-out third digital signal is applied to an input 31 of error correction means 32. The means 32 first perform a 10-to-8 conversion. Then an error correction operation is carried out and a possible de-interleaving of the information which has been read out. The signal thus decoded corresponds to the second digital signal as shown in Fig. 2, including the aselectively modulated allocation information. This signal is supplied to an output 33. The digital signal is applied to an input 44 of a demodulator 43, which demodulates the allocation information in a manner inverse to the modulation at the transmitter end in order to restore the original allocation information. The original second digital signal then appears at the output 45 and is applied to an input 34 of means 35. The means 35 derive from the frames shown in Fig. 2 the allocation information, the scale factor information and the samples for each signal block in each subband. After dequantization and a multiplication by the scale factors the subband signals SB₁ to SB_{M} appear at the outputs 37.1 to 37.M. These subband signals are applied to inputs 39.1 to 39.M of synthesis filter means 36, which reconstruct the original digital signal from the subband signals. The operation of the synthesis filter means 36 is discussed extensively in document (7) of the citation index. The original digital signal is applied by the means 36 to an output 40 of the receiver. This signal is, for example, the left-channel signal portion of the original digital signal. It is obvious that the means 35 also have M outputs at which the subband signals of the right-channel signal portion are available. Synthesis filter means (not shown), such as the filter means 36, are provided to reconstruct the original right-channel signal portion from these subband signals.

The demodulator means 43 may be as shown in Fig. 4, in which the section bearing the reference numeral 24 now functions as a demodulator. The switches S1 and S2 are controlled in the same way as described for the operation of the circuit of Fig. 4 at the transmitter end.

If during transmission (recording) a self-synchronizing modulator (scrambler) is used a corresponding self-synchronizing demodulator (descrambler) will have to be used during reception (reading). If during transmission a non-self-synchronizing modulator as described with reference to Fig. 5 is used a corresponding non-self-synchronizing demodulator will have to be used in the decoder unit 43, for example the circuit shown in Fig. 5, which can also function as a demodulator (scrambler), as stated in the description of this circuit.

In a second embodiment of the invention the transmitter shown in Fig. 1b comprises third coding means 25 for changing the sequence of the bit allocation information in a frame. Figure 6a illustrates a possible bit allocation included in the form of y-bit code words in the second frame portion FD2 of a frame. The y-bits code - words AW(I,1), AW(II,1), AW(I,2), AW(II,2), AW(I,3), AW(II,3), .... , AW(j,m), .... , AW(I,M), AW(II,M) are included in the second frame portion in this sequence. In document (2) the code words AW are represented as 4-bit words. Fig. 6b shows diagrammatically how the sequence can be after the sequence of the code words AW has been changed in the coding means 25 in the case that this change is effected on a word basis. This means that the allocation words AW themselves are not affected.

If at the receiver end no allowance is made for the changed sequence the first word AW(I,M) will be taken to be the code word AW(I,1) and in each part of the third frame portion FD3 which follows the scale factors groups of n_{M} bits instead of n₁ bits will be combined to obtain the quantized samples in the first channel and the first subband. If n₁ is assumed to be 4 and n_{M} is taken to be 3 this means that in succession q (this is because there are q samples in one signal block in a channel in a subband) 3-bit groups will be derived, whereas q 4-bit groups should have been derived. Consequently, the receiver performs an incorrect decoding. Thus, before a correct decoding is possible the receiver, *i.e.* the second decoding means 43, should change the sequence to restore the original sequence as illustrated in Fig. 6a. This means that the manner in which the allocation information has been processed in the transmitter should be known at the receiver end.

In principle, there are M! possibilities of changing the sequence in the transmitter. Particularly for greater values of M, for example 32, this results in a large number of possibilities, so that cracking the algorithm on which the change is based is virtually impossible.

It is to be noted that the invention has been described largely as a coding and transmission of a monophonic signal. However, the invention is not restricted thereto. The invention may likewise be applied to coding of a stereophonic signal, in which case each subband has two signal portions, *i.e.* a left-channel and a right-channel portion. The invention may also be applied to coding arrangements in which one or more of the subband signals can be coded in a stereo intensity mode. For an explanation of the intensity mode coding reference be made to the documents (2) and (6) of the citation index.

### REFERENCES:

(1) European Patent Application no. 0,289,080 (PHN 12.108)
(2) European Patent Application no. 0,402,973 (PHN 13.241)
(3) EBU Techn. Review No. 230, August 1988 G. Theile et al "Low bit rate coding of high-quality audio signals. An introduction to the MASCAM system".
(4) Philips Journal of Research 44, 329-343, 1989 R.N.J. Veldhuis et al. "Subband coding of digital audio signals".
(5) IEEE ICASSP 80, Vol. 1, 327-331, April 9-11-1980 M.A. Krasner "The critical band coder Digital encoding of speech signals based on perceptual requirements of the auditory system".
(6) Dutch Patent Application no. 91.00.173 (PHN 13.581)
(7) European Patent Application no. 0,400,755 (PHQ 89.018A)
(8) Dutch Patent Application no. 90.00.635 (PHN 13.281)
(9a) Dutch Patent Application no. 90.01.127 (PHN 13.328)
(9b) Dutch Patent Application no. 90.01.128 (PHN 13.329)
(10) European Patent Application no. 0,150,081 (PHN 11.117)
(11) United States Patent no. 4,603,413 (PHN 10.830)

## Claims

1. A transmitter for transmitting, *via* a transmission or recording medium, a wide-band digital signal sampled with a specific sample frequency Fₛ, the transmitter comprising:
an input terminal (1) for receiving the wide-band digital signal;
first coding means (2) comprising signal splitting means (LP,BP,HP) for splitting the wide-band digital signal into successive subbands having band numbers m which increase as the frequency increases, where 1 ≤ m ≤ M, to generate a plurality of M subband signals with sample frequency reduction;
quantization means (Q₁...Q_{M}) for a blockwise quantization of the respective subband signals, a quantized subband signal being formed by consecutive signal blocks, each signal block comprising q samples;
bit allocation means (7) for generating bit allocation information specifying the number of bits representative of the q samples in a signal block;
scale-factor-information determining means (10) for determining information related to a scale factor belonging to each signal block in the subband signal;
means (14) for accommodating the quantized subband signals, the scale factor information and the bit allocation information in a frame of a second digital signal formed by successive frames;
second coding means (15) for converting the second digital signal into an encoded digital signal so as to enable said encoded digital signal to be transmitted *via* the transmission or recording medium; and
means (16) for applying the encoded digital signal to the transmission or recording medium,
**characterized in that** the transmitter comprises third coding means (25) for selectively subjecting the bit allocation information in a frame to a signal processing step to protect information to be transmitted from being received by unauthorized persons.

2. A transmitter as claimed in Claim 1, **characterized in that** the third coding means (25) are adapted to aselectively modulate the bit allocation information in the frame.

3. A transmitter as claimed in Claim 2, **characterized in that** the third coding means (25) comprise a self-synchronizing modulator.

4. A transmitter as claimed in Claim 2, **characterized in that** the third coding means (25) comprise a non-self-synchronizing modulator.

5. A transmitter as claimed in any one of the Claims 1 to 4, **characterized in that** the third coding means (25) are adapted to aselectively modulate the bit allocation information in the second digital signal.

6. A transmitter as claimed in Claim 1, **characterized in that** the third coding means (25) are adapted to change the sequence of the bit allocation information in the frame.

7. A transmitter as claimed in Claim 6, **characterized in that** the third coding means (25) are adapted to change the sequence of y-bit code words forming the bit allocation information.

8. A receiver for receiving, from a transmission or recording medium, an encoded digital signal, the receiver comprising:
first means (30) for receiving the encoded digital signal from the transmission or recording medium,
first decoding means (32) for converting the encoded digital signal into a second digital signal,
second means (35) for deriving quantized subband signals, bit allocation information and scale factor information from frames in the second digital signal,
synthesis filter means (36) for combining the subbands to a signal band of a wide-band digital signal with a sample frequency increase,
**characterized in that** the receiver comprises second decoding means (43) for selectively subjecting the modulated bit allocation information in the frame to a signal processing step which is inverse to a signal processing step in a transmitter that has been carried out to protect the information to be transmitted from being received by unauthorized persons.

9. A receiver as claimed in Claim 8, **characterized in that** the second decoding means (43) are adapted to demodulate the modulated bit allocation information in the frame in a manner inverse to a modulation in the transmitter.

10. A receiver as claimed in Claim 9, **characterized in that** the second decoding means (43) are adapted to demodulate the modulated bit allocation information in the second digital signal in a manner inverse to the modulation in the transmitter.

11. A receiver as claimed in Claim 8, **characterized in that** the second decoding means (43) are adapted to change the sequence of the bit allocation information in a manner inverse to the change of sequence in the transmitter.

12. A receiver as claimed in Claim 11, **characterized in that** the second decoding means (43) are adapted to change the sequence of the code words forming the bit allocation information in a manner inverse to the change of sequence in the transmitter.

13. A record carrier on which an encoded digital signal has been stored, which encoded digital signal accommodates frames comprising:
quantized subband signals being formed by consecutive signal blocks, each signal block comprising q samples;
bit allocation information, the bit allocation information specifying the number of bits representative of the q samples in a signal block; and
scale factor information related to a scale factor belonging to each signal block in the subband signal,
wherein the bit allocation information has been selectively subjected to a signal processing step to protect the information to be transmitted from being received by unauthorized persons.

14. A method of transmitting, *via* a transmission or recording medium, a wide-band digital signal sampled with a specific sample frequency F_{S}, the method comprising:
receiving the wide-band digital signal in an input terminal (1);
a first coding step (2) for splitting (LP,BP,HP) the wide-band digital signal into successive subbands having band numbers m which increase as the frequency increases, where 1 ≤ m ≤ M, to generate a plurality of M subband signals with sample frequency reduction;
blockwise quantizing (Q₁...Q_{M}) the respective subband signals, a quantized subband signal being formed by consecutive signal blocks, each signal block comprising q samples;
generating (7) bit allocation information specifying the number of bits representative of the q samples in a signal block;
determining (10) scale-factor-information related to a scale factor belonging to each signal block in the subband signal;
accommodating (14) the quantized subband signals, the scale factor information and the bit allocation information in a frame of a second digital signal formed by successive frames;
converting (15) the second digital signal into an encoded digital signal so as to enable said encoded digital signal to be transmitted *via* the transmission or recording medium; and
applying (16) the encoded digital signal to the transmission or recording medium,
**characterized in that** the method comprises selectively subjecting (25) the bit allocation information in a frame to a signal processing step to protect information to be transmitted from being received by unauthorized persons.

15. A method of receiving, from a transmission or recording medium, an encoded digital signal, the method comprising:
receiving (30) the encoded digital signal from the transmission or recording medium,
converting (32) the encoded digital signal into a second digital signal,
deriving (35) quantized subband signals, bit allocation information and scale factor information from frames in the second digital signal,
combining (36) the subbands to a signal band of a wide-band digital signal with a sample frequency increase,
**characterized in that** the method comprises selectively subjecting (43) the nodulated bit allocation information in the frame to a signal processing step which is inverse to a signal processing step in a transmitter that has been carried out to protect the information to be transmitted from being received by unauthorized persons.

## Patentansprüche

1. Sender zum über ein Übertragungsmedium oder ein Aufzeichnungsmedium Übertragen eines digitalen Breitbandsignals, das mit einer bestimmten Frequenz Flüssigen Schmiermittels abgetastet wird, wobei der Sender die nachfolgenden Elemente umfasst:
- eine Eingangsklemme (1) zum Empfangen des digitalen Breitbandsignals,
- erste Codierungsmittel (2) mit Signalaufteilungsmitteln (LP, BP, HP) zum Aufteilen des digitalen Breitbandsignals in aufeinander folgende Teilbänder mit Bandzahlen m, die zunehmen, wenn die Frequenz zunimmt, wobei 1 ≤ m ≤ M ist, zum Erzeugen einer Anzahl M Teilbandsignale mit Abtastfrequenzreduktion,
- Quantisierungsmittel (Q₁...Q_{M}) zur blockweisen Quantisierung der betreffenden Teilbandsignale, wobei ein quantisiertes Teilbandsignal durch aufeinander folgende Signalblöcke gebildet wird, wobei jeder Signalblock q Abtastwerte enthält,
- Bitzuordnungsmittel (7) zum Erzeugen von Bitzuordnungsinformation, welche die Anzahl Bits spezifiziert, die repräsentativ sind für die q Abtastwerte in einem Signalblock,
- Mittel (10) zum Bestimmen der Skalierungsfaktorinformation in Bezug auf einen Skalierungsfaktor, der zu jedem Signalblock in dem Teilbandsignal gehört,
- Mittel (14) zum Unterbringen der quantisierten Teilbandsignale, wobei die Skalierungsfaktorinformation und die Bitzuordnungsinformation in einem Frame eines zweiten digitalen Signals durch aufeinander folgende Frames gebildet wird,
- zweite Codierungsmittel (15) zum Umwandeln des zweiten digitalen Signals in ein codiertes digitales Signal, um es zu ermöglichen, dass das genannte codierte digitale Signal über das Übertragungs- oder Aufzeichnungsmedium übertragen wird, und
- Mittel (16) zum Zuführen des codierten digitalen Signals zu dem Übertragungs- oder Aufzeichnungsmedium,
**dadurch gekennzeichnet, dass** der Sender dritte Codierungsmittel (25) aufweist um die Bitzuordnungsinformation in einem Frame selektiv einem Signalverarbeitungsschritt auszusetzen um zu vermeiden, dass die zu übertragende Information von nicht befugten Personen empfangen wird.

2. Sender nach Anspruch 1, **dadurch gekennzeichnet, dass** die dritten Codierungsmittel (25) die Bitzuordnungsinformation in dem Frame aselektiv modulieren.

3. Sender nach Anspruch 2, **dadurch gekennzeichnet, dass** die dritten Codierungsmittel (25) einen selbst synchronisierenden Modulator enthalten.

4. Sender nach Anspruch 2, **dadurch gekennzeichnet, dass** die dritten Codierungsmittel (25) einen nicht selbst synchronisierenden Modulator enthalten.

5. Sender nach einem der Ansprüche 1 bis 4, **dadurch gekennzeichnet, dass** die dritten Codierungsmittel (25) die Bitzuordnungsinformation in dem zweiten digitalen Signal aselektiv modulieren.

6. Sender nach Anspruch 1, **dadurch gekennzeichnet, dass** die dritten Codierungsmittel (25) die Sequenz der Bitzuordnungsinformation in dem Frame ändern.

7. Sender nach Anspruch 6, **dadurch gekennzeichnet, dass** die dritten Codierungsmittel (25) die Sequenz von y-Bit Codewörtern, welche die Bitzuordnungsinformation bilden, ändern.

8. Empfänger zum von einem Übertragungs- oder Aufzeichnungsmedium Empfangen eines codierten digitalen Signals, wobei der Empfänger die nachfolgenden Elemente umfasst:
- erste Mittel (30) zum Empfangen des codierten digitalen Signals von dem Übertragungs- oder Aufzeichnungsmedium,
- erste Decodierungsmittel (32) zum Umwandeln des codierten, digitalen Signals in ein zweites digitales Signal,
- zweite Mittel (35) zum Herleiten quantisierter Teilbandsignale, Bitzuordnungsinformation und Skalierungsfaktorinformation aus Frames in dem zweiten Digitalen Signal,
- Synthesefiltermittel (36) zum Kombinieren der Teilbänder zu einem Signalband eines digitalen Breitbandsignals mit einer Abtastfrequenzzunahme,
**dadurch gekennzeichnet, dass** der Empfänger zweite Decodierungsmittel (43) aufweist um die modulierte Bitzuordnungsinformation in dem Frame selektiv einem Signalverarbeitungsschritt auszusetzen, der invers ist zu dem Verarbeitungsschritt in einem Sender, der durchgeführt wurde um zu vermeiden, dass die zu übertragende Information von nicht befugten Personen empfangen wird.

9. Empfänger nach Anspruch 8, **dadurch gekennzeichnet, dass** die zweiten Decodierungsmittel (43) die modulierte Bitzuordnungsinformation in dem Frame in einer Art und Weise, die invers ist zu einer Modulation in dem Sender, demodulieren.

10. Empfänger nach Anspruch 9, **dadurch gekennzeichnet, dass** die zweiten Decodierungsmittel (43) die modulierte Bitzuordnungsinformation in dem zweiten digitalen Signal in einer Art und Weise, die invers ist zu der Modulation in dem Sender, demodulieren.

11. Empfänger nach Anspruch 8, **dadurch gekennzeichnet, dass** die zweiten Decodierungsmittel (43) die Sequenz der Bitzuordnungsinformation in einer Art und Weise, die invers ist zu der Änderung in dem Sender, ändern.

12. Empfänger nach Anspruch 11, **dadurch gekennzeichnet, dass** die zweiten Decodierungsmittel (43) die Sequenz der Codewörter, welche die Bitzuordnungsinformation bilden, in einer Art und Weise, die invers ist zu der Änderung der Sequenz in dem Sender, ändern.

13. Aufzeichnungsträger, auf dem ein codiertes digitales Signal gespeichert ist, wobei dieses codierte digitale Signal Frames enthält, die Folgendes umfassen:
- quantisierte Teilbandsignale, die durch aufeinanderfolgende Signalblöcke gebildet werden, wobei jeder Signalblock q Abtastwerte enthält;
- Bitzuordnungsinformation, welche die Anzahl Bits spezifiziert, die repräsentativ sind für die q Abtastwerte in einem Signalblock, und
- Skalierungsfaktorinformation, bezogen auf einen Skalierungsfaktor, der jedem Signalblock in dem Teilbandsignal zugehört, wobei die Bitzuordnungsinformation selektiv einem Signalverarbeitungsschritt ausgesetzt wird um zu vermeiden, dass die zu übertragende Information von nicht befugten Personen empfangen wird.

14. Verfahren zum über ein Übertragungs- oder Aufzeichnungsmedium Übertragen eines digitalen Breitbandsignals, abgetastet mit einer spezifischen Abtastfrequenz Fₛ, wobei dieses Verfahren die nachfolgenden Verfahrensschritte umfasst:
- das Empfangen des digitalen Breitbandsignals an einer Eingangsklemme (1),
- einen ersten Codierungsschritt (2) zum Aufteilen (LP, BP, HP) des digitalen Breitbandsignals in aufeinander folgende Teilbänder mit Bandnummern m, die zunehmen, wenn die Frequenz zunimmt, wobei 1 ≤ m ≤ M ist, zum Erzeugen einer Anzahl M Teilbandsignale mit Abtastfrequenzreduktion,
- eine blockweise Quantisierung (Q₁...Q_{M}) der betreffenden Teilbandsignale, wobei ein quantisiertes Teilbandsignal durch aufeinander folgende Signalblöcke gebildet wird, wobei jeder Signalblock q Abtastwerte aufweist,
- das Erzeugen (7) von Bitzuordnungsinformation, welche die Anzahl Bits spezifiziert, die repräsentativ sind für die q Abtastwerte in einem Signalblock,
- das Bestimmen (10) von Skalierungsfaktorinformation, bezogen auf einen Skalierungsfaktor, der jedem Signalblock in dem Teilbandsignal zugehört,
- das Unterbringen (14) der quantisierten Teilbandsignale, wobei die Skalierungsfaktorinformation und die Bitzuordnungsinformation in einem Frame eines zweiten digitalen Signals durch aufeinander folgende Frames gebildet werden,
- das Umwandeln (15) des zweiten digitalen Signals in ein codiertes digitales Signal, damit es möglich wird, dass das genannte codierte digitale Signal über das Übertragungs- oder Aufzeichnungsmedium übertragen wird, und
- das Zuführen (16) des codierten digitalen Signals zu dem Übertragungs- oder Aufzeichnungsmedium, **dadurch gekennzeichnet, dass** das Verfahren umfasst, dass die Bitzuordnungsinformation in einem Frame einem Signalverarbeitungsschritt ausgesetzt wird (25) um zu vermeiden, dass zu übertragende Information von nicht befugten Personen empfangen wird.

15. Verfahren zum von einem Übertragungs- oder Aufzeichnungsmedium Empfangen eines codierten digitalen Signals, wobei dieses Verfahren die nachfolgenden Vertahrensschritte umfasst:
- das Empfangen (30) des codierten digitalen Signals von dem Übertragungs- oder Aufzeichnungsmedium,
- das Umwandeln (32) des codierten digitalen Signals in ein zweites digitales Signal,
- das Herleiten (35) von quantisierten Teilbandsignalen, von Bitzuordnungsinformation und von Skalierungsfaktorinformation aus Frames in dem zweiten digitalen Signal,
- das Kombinieren (36) der Teilbänder zu einem Signalband eines digitalen Breitbandsignals mit einer Abtastfrequenzzunahme, **dadurch gekennzeichnet, dass** das Verfahren umfasst, dass die modulierte Bitzuordnungsinformation in dem Frame einem Signalverarbeitungsschritt selektiv ausgesetzt (43) wird, wobei dieser Schritt invers zu einem Signalverarbeitungsschritt in einem Sender ist, der durchgeführt worden ist um zu vermeiden, dass die zu übertragende Information von nicht befugten Personen empfangen wird.

## Revendications

1. Emetteur pour transmettre, par l'intermédiaire d'un support de transmission ou d'enregistrement, un signal numérique à large bande échantillonné à une fréquence d'échantillonnage spécifique F_{S}, l'émetteur comportant:
- une borne d'entrée (1) pour recevoir le signal numérique à large bande;
- un premier moyen de codage (2) comprenant un moyen de division de signal (LP,BP,HP) pour diviser le signal numérique à large bande en des sous-bandes successives ayant des nombres m de bandes qui augmentent avec la fréquence, où 1 ≤ *m* ≤ *M*, pour produire une pluralité de M signaux de sous-bandes avec une réduction de fréquence d'échantillonnage;
- un moyen de quantification (Q₁...Q_{M}) pour une quantification par bloc des signaux de sous-bandes respectifs, un signal de sous-bande quantifié étant formé de blocs de signaux consécutifs, chaque bloc de signaux comprenant q échantillons;
- un moyen d'affectation de bits (7) pour produire des informations d'affectation de bits spécifiant le nombre de bits représentant les q échantillons dans un bloc de signaux;
- un moyen déterminant des informations de facteur d'échelle (10) pour déterminer des informations concernant un facteur d'échelle appartenant à chaque bloc de signaux dans le signal de sous-bande;
- un moyen (14) pour recevoir les signaux de sous-bandes quantifiés, les informations de facteur d'échelle et les informations d'affectation de bits dans une trame d'un deuxième signal numérique constitué de trames successives;
- un deuxième moyen de codage (15) pour convertir le deuxième signal numérique en un signal numérique codé de manière à activer ledit signal numérique codé à transmettre par l'intermédiaire du support de transmission ou d'enregistrement, et
- un moyen (16) pour appliquer le signal numérique codé au support de transmission ou d'enregistrement,
**caractérisé en ce que** l'émetteur comporte un troisième moyen de codage (25) pour soumettre de manière sélective les informations d'affectation de bits dans une trame à une étape de traitement de signaux afin de protéger les informations à transmettre contre leur réception par des personnes non autorisées.

2. Emetteur suivant la revendication 1, **caractérisé en ce que** le troisième moyen de codage (25) est à même de moduler de manière non sélective les informations d'affectation de bits dans la trame.

3. Emetteur suivant la revendication 2, **caractérisé en ce que** le troisième moyen de codage (25) comporte un modulateur à synchronisation automatique.

4. Emetteur suivant la revendication 2, **caractérisé en ce que** le troisième moyen de codage (25) comporte un modulateur à synchronisation non automatique.

5. Emetteur suivant l'une quelconque des revendications 1 à 4, **caractérisé en ce que** le troisième moyen de codage (25) est à même de moduler de manière non sélective les informations d'affectation de bits dans le deuxième signal numérique.

6. Emetteur suivant la revendication 1, **caractérisé en ce que** le troisième moyen de codage (25) est à même de modifier la séquence des informations d'affectation de bits dans la trame.

7. Emetteur suivant la revendication 6, **caractérisé en ce que** le troisième moyen de codage (25) est à même de modifier la séquence des mots de code à y bits formant les informations d'affectation de bits.

8. Récepteur pour recevoir, d'un support de transmission ou d'enregistrement, un signal numérique codé, le récepteur comportant :
- un premier moyen (30) pour recevoir le signal numérique codé du support de transmission ou d'enregistrement;
- un premier moyen de décodage (32) pour convertir le signal numérique codé en un deuxième signal numérique;
- un deuxième moyen (35) pour dériver des signaux de sous-bandes quantifiés, des informations d'affectation de bits et des informations de facteur d'échelle de trames dans le deuxième signal numérique;
- un moyen de filtrage de synthèse (36) pour combiner les sous-bandes en une bande de signal d'un signal numérique à large bande avec une augmentation de la fréquence d'échantillonnage,
**caractérisé en ce que** le récepteur comporte un deuxième moyen de décodage (43) pour soumettre de manière sélective les informations d'affectation de bits modulées dans la trame à une étape de traitement de signaux qui est l'inverse d'une étape de traitement de signaux dans un émetteur qui a été effectuée pour protéger les informations à transmettre contre toute réception par des personnes non autorisées.

9. Récepteur suivant la revendication 8, **caractérisé en ce que** le deuxième moyen de décodage (43) est à même de démoduler les informations d'affectation de bits modulées dans la trame d'une manière inverse d'une modulation dans l'émetteur.

10. Récepteur suivant la revendication 9, **caractérisé en ce que** le deuxième moyen de décodage (43) est à même de démoduler les informations d'affectation de bits modulées dans le deuxième signal numérique d'une manière inverse de la modulation dans l'émetteur.

11. Récepteur suivant la revendication 8, **caractérisé en ce que** le deuxième moyen de décodage (43) est à même de modifier la séquence des informations d'affectation de bits d'une manière inverse de la modification de la séquence dans l'émetteur.

12. Récepteur suivant la revendication 11, **caractérisé en ce que** le deuxième moyen de décodage (43) est à même de modifier la séquence des mots de code formant les informations d'affectation de bits d'une manière inverse de la modification de la séquence dans l'émetteur.

13. Support d'enregistrement sur lequel un signal numérique codé a été stocké, lequel signal numérique codé contient des trames, comportant:
- des signaux de sous-bandes quantifiés formés par des blocs de signaux consécutifs, chaque bloc de signaux comprenant q échantillons;
- des informations d'affectation de bits, les informations d'affectation de bits spécifiant le nombre de bits représentant les q échantillons dans un bloc de signaux, et
- des informations de facteur d'échelle en rapport avec un facteur d'échelle appartenant à chaque bloc de signaux dans le signal de sous-bande,
dans lequel les informations d'affectation de bits ont été soumises de manière sélective à une étape de traitement de signaux afin de protéger les informations à transmettre contre leur réception par des personnes non autorisées.

14. Procédé de transmission, par l'intermédiaire d'un support de transmission ou d'enregistrement, d'un signal numérique à large bande avec une fréquence d'échantillonnage spécifique F_{S}, le procédé comprenant:
- la réception du signal numérique à large bande dans une borne d'entrée (1);
- une première étape de codage (2) pour diviser (LP,BP,HP) le signal numérique à large bande en des sous-bandes successives ayant des nombres m de bandes qui augmentent avec la fréquence, où 1 *≤ m* ≤ *M*, pour produire une pluralité de M signaux de sous-bandes avec une réduction de fréquence d'échantillonnage;
- la quantification par bloc (Q₁...Q_{M}) des signaux de sous-bandes respectifs, un signal de sous-bande quantifié étant formé de blocs de signaux consécutifs, chaque bloc de signaux comprenant q échantillons;
- la production (7) des informations d'affectation de bits spécifiant le nombre de bits représentant les q échantillons dans un bloc de signaux;
- la détermination (10) des informations de facteur d'échelle en rapport avec un facteur d'échelle appartenant à chaque bloc de signaux dans le signal de sous-bande;
- l'admission (14) des signaux de sous-bandes quantifiés, des informations de facteur d'échelle et des informations d'affectation de bits dans une trame d'un deuxième signal numérique constitué par des trames successives;
- la conversion (15) du deuxième signal numérique en un signal numérique codé de manière à activer ledit signal numérique codé à transmettre par l'intermédiaire du support de transmission ou d'enregistrement, et
- l'application (16) du signal numérique codé au support de transmission ou d'enregistrement,
**caractérisé en ce que** le procédé comprend le fait de soumettre (25) de manière sélective les informations d'affectation de bits dans une trame à une étape de traitement de signaux pour protéger les informations à transmettre contre leur réception par des personnes non autorisées.

15. Procédé pour recevoir, d'un support de transmission ou d'enregistrement, un signal numérique codé, le procédé comprenant :
- la réception (30) du signal numérique codé du support de transmission ou d'enregistrement;
- la conversion (32) du signal numérique codé en un deuxième signal numérique;
- la dérivation (35) de signaux de sous-bandes quantifiés, d'informations d'affectation de bits et d'informations de facteur d'échelle de trames dans le deuxième signal numérique;
- la combinaison (36) des sous-bandes en une bande de signal d'un signal numérique à large bande avec une augmentation de la fréquence d'échantillonnage,
**caractérisé en ce que** le procédé comprend le fait de soumettre de manière sélective (43) les informations d'affectation de bits modulées dans la trame à une étape de traitement de signaux qui est l'inverse d'une étape de traitement de signaux dans un émetteur qui a été effectuée pour protéger les informations à transmettre contre leur réception par des personnes non autorisées.
